# EUROPEAN PATENT APPLICATION

(11) **EP 2 400 373 A1**
(43) Date of publication of application: **28.12.2011**
(21) Application number: 10006463.3
(22) Date of filing: 22.06.2010
(51) Int. Cl.: G06F 3/023, G06F 3/048

(54) **Inputting symbols into an electronic device having a touch-screen**

(71) Applicant: Vodafone Holding GmbH, 40213 Düsseldorf (DE)
(72) Inventor: Breuer, Andreas, 40629 Düsseldorf (DE)
(74) Representative: Ring & Weisbrodt

(57) **Abstract**

The present invention relates to a graphical user interface for inputting symbols into an electronic device having a touch-screen, especially a portable consumer device like a terminal for use in a mobile communication network according to GSM, GPRS, UMTS and/or LTE standard, comprising display means for representing a plurality of selectable keys of a keyboard on the touch-screen, said plurality of keys associated with symbols of a symbol set, and mapping means for selecting a symbol in response to a user input using a one of said plurality of keys associated with symbols of a symbol set, said graphical user interface is characterized by means for inputting symbols into said electronic device with kinemimic gestics, realising an input of symbols with direction inducing gestics.

The present invention further relates to a method for inputting symbols into an electronic device having a touch-screen, especially a portable consumer device like a terminal for use in a mobile communication network according to GSM, GPRS, UMTS and/or LTE standard, comprising: representing a plurality of selectable keys of a keyboard on the touch-screen, said plurality of keys associated with symbols of a symbol set, and mapping for selecting a symbol in response to a user input using a one of said plurality of keys associated with symbols of a symbol set, which is characterized by inputting symbols into said electronic device with kinemimic gestics, realising an input of symbols with direction inducing gestics.

Furthermore, the present invention relates to an electronic device, especially a portable consumer device like a terminal for use in a mobile communication network according to GSM, GPRS, UMTS and/or LTE standard, comprising a graphical user interface for inputting symbols into said electronic device according to the present invention with a method according to the present invention.

## Description

The present invention relates to a graphical user interface for inputting symbols into an electronic device having a touch-screen, especially a portable consumer device like a terminal for use in a mobile communication network according to GSM, GPRS, UMTS and/or LTE standard, comprising display means for representing a plurality of selectable keys of a keyboard on the touch-screen, said plurality of keys associated with symbols of a symbol set, and mapping means for selecting a symbol in response to a user input using a one of said plurality of keys associated with symbols of a symbol set.

The present invention further relates to a method for inputting symbols into an electronic device having a touch-screen, especially a portable consumer device like a terminal for use in a mobile communication network according to GSM, GPRS, UMTS and/or LTE standard, comprising: representing a plurality of selectable keys of a keyboard on the touch-screen, said plurality of keys associated with symbols of a symbol set, and mapping for selecting a symbol in response to a user input using a one of said plurality of keys associated with symbols of a symbol set.

Furthermore, the present invention relates to an electronic device, especially a portable consumer device like a terminal for use in a mobile communication network according to GSM, GPRS, UMTS and/or LTE standard, comprising a graphical user interface for inputting symbols into said electronic device according to the present invention with a method according to the present invention.

In the state of the art numerous solutions for inputting symbols into an electronic device, especially a terminal for use in a mobile communication network, are known. For inputting symbols into the device such devices have an input device for inputting commands, text, phone numbers and the like to control the device and/or functions of the device. Especially for a portable consumer device like a terminal for use in a mobile communication network, such devices usually comprise a reduced key keyboard as an input device. A reduces key keyboard thereby usually comprise fewer keys than a standard keyboard for computing devices, for example personal computer and the like. Thus the keys of a reduced key keyboard have to be able to input more than one symbol. In the case of a portable terminal for use in a mobile communication network, which normally comprises a key reduces keyboard, it is possible to input different symbols with one key by pressing this key several times to chose the respective symbol of the symbols which are associated with the key, so called multi-tapping. The input of symbols is accordingly extensive, cumbersome and slowly.

To ease the input of symbols especially when using a key reduced keyboard, different solutions are known in the state of the art, for example systems and/or methods using a prediction algorithm, which guesses what symbol of the symbols associated with a key is wanted to be inputted by a user. Such a system referred to as "T9" is for example disclosed in the EP 0 842 463 B1 or EP 1 256 871 A2. Another such solution referred to as "WordWise" is for example disclosed in the CA 2,353,862 A1.

For inputting symbols into an electronic device, especially a portable consumer device like a terminal for use in a mobile communication network, the usage of a touch-screen as an input device respectively input means is known. Such a device is for example disclosed in the US 7,479,949 B2. Usually a touch-screen is an electronic visual output device, that can detect the presence and location of a touch within the screen area respectively display area. The touch-screen sense a touch or contact to the display of the touch-screen by a finger, hand or other passive objects, for example a pen or the like. The US 7,479,949 B2 discloses the possibility to use the touch-screen for so called tap gestures to change or scroll the image displayed on the touch-screen. Further US 7,479,949 B2 discloses the possibility to use the touch-screen for magnifiying or zooming the image displayed on the touch-screen with a so called multi-finger de-pinching gesture. In the state of the art are several types of touch-screen technologies known, for example so called resistive touch-screens, capacitive touch-screens and/or the like. Electronic devices having a touch-screen as an input device thereby provide selectable keys of a keyboard on the touch-screen respectively on the display of the touch-screen.

The so far known touch-screens, especially for a terminal for use in a mobile communication network, for example a mobile phone, so far only represents the keys of a keyboard in a manner and/or with functions identical and/or similar to electronic devices having a real keyboard with selectable keys for an input device, for example a reduced key keyboard of a mobile phone according to ISO/IEC 9995-8, related to the assignment of the basic 26 Latin letters "A" to "Z", the numbers "0" to "9" and special characters "*" and "#" to the 12-key telephone keypad, or for example according to a so called QWERTY keyboard layout of a computer, especially according ISO/IEC 9995-3.

Thus so far known electronic devices having a touch-screen have only adopted respectively transferred the layout and functions of a real keyboard to a keyboard represented by or with the touch-screen.

In view of this state of the art, it is the object of the present invention to improve the input of symbols into an electronic device having a touch-screen, especially concerning an easier, less cumbersome and more intuitive handling for the user, especially concerning input of symbols.

For the technical solution the present invention proposes a graphical user interface for inputting symbols into an electronic device having a touch-screen, especially a portable consumer device like a terminal for use in a mobile communication network according to GSM, GPRS, UMTS and/or LTE standard, comprising display means for representing a plurality of selectable keys of a keyboard on the touch-screen, said plurality of keys associated with symbols of a symbol set, and mapping means for selecting a symbol in response to a user input using a one of said plurality of keys associated with symbols of a symbol set, characterized by means for inputting symbols into said electronic device with kinemimic gestics, realising an input of symbols with direction inducing gestics.

The invention is based upon the knowledge that thanks to the graphical user interface according to the invention an easier, less cumbersome and more intuitive handling for the user of an electronic device having a touch-screen is achievable, especially since there is no need for only adopting respectively transferring the layout and functions of a real keyboard to a keyboard represented by or with the touch-screen.

The solution according to the invention advantageously uses kinemimic gestics for inputting different symbols with a one of said plurality of keys associated with symbols of a symbol set. This especially reduces the effort of the user to input symbols into the electronic device and makes the input of symbols more intuitive for the user.

Said means for inputting symbols into said electronic device with kinemimic gestics realise preferably upper and/or lower case input and/or special character input. Another preferred embodiment of the invention is characterized in that said upper and/or lower case input and/or special character input takes place according the respective used language. For example comprise the German language special characters like "Ä", "ä", "Ö", "ö", "Ü", "ü" or "ß".

In another advantageously embodiment of the present invention an input with kinemimic gestics comprise an input of different symbols with a one of said plurality of keys by pressing said key, by moving or shifting said key upwards, by moving or shifting said key downwards, by moving or shifting said key to the left, by moving or shifting said key to the right, or by movement or shifting said key describing a kind of circle. A moving or shifting said key upwards realises advantageously an upper case input. A pressing said key or a moving or shifting said key downwards realises advantageously a lower case input.

Another advantageously embodiment of the invention is characterized by display means for displaying inputted symbols on the touch-screen, preferable in a portion of the touch-screen which is disposed at a distance of the keys displayed on the touch-screen, especially preferable in a portion of the touch-screen which is located above the portion, the keys are displayed in.

Moreover, for the technical solution the present invention relates to a method for inputting symbols into an electronic device having a touch-screen, especially a portable consumer device like a terminal for use in a mobile communication network according to GSM, GPRS, UMTS and/or LTE standard, comprising: representing a plurality of selectable keys of a keyboard on the touch-screen, said plurality of keys associated with symbols of a symbol set, and mapping for selecting a symbol in response to a user input using a one of said plurality of keys associated with symbols of a symbol set, which is characterized by inputting symbols into said electronic device with kinemimic gestics, realising an input of symbols with direction inducing gestics.

A further advantageously embodiment of the invention is characterized by inputting symbols into said electronic device with kinemimic gestics realising upper and/or lower case input and/or special character input. Said upper and/or lower case input and/or special character input advantageously takes place according the respective used language.

A preferred embodiment of the invention is characterized by inputting different symbols with a one of said plurality of keys by pressing said key, by moving or shifting said key upwards, by moving or shifting said key downwards, by moving or shifting said key to the left, by moving or shifting said key to the right, or by movement or shifting said key describing a kind of circle. A moving or shifting said key upwards preferably realises an upper case input. A pressing said key or a moving or shifting said key downwards preferably realises a lower case input.

A further advantageously embodiment of the invention is characterized by displaying inputted symbols on the touch-screen, preferable in a portion of the touch-screen which is disposed at a distance of the keys displayed on the touch-screen, especially preferable in a portion of the touch-screen which is located above the portion, the keys are displayed in.

Furthermore, the present invention relates to an electronic device, especially a portable consumer device like a terminal for use in a mobile communication network according to GSM, GPRS, UMTS and/or LTE standard, comprising a graphical user interface for inputting symbols into said electronic device according to the present invention, preferably with a method according to the present invention. In a preferred embodiment of the present invention said electronic device is a mobile phone having a touch-screen.

Further details, characteristics and advantages of the invention are explained in the following in more detail based on the description of the exemplary embodiments shown in the figures of the drawing. In these figures:
- Fig. 1: shows an electronic device with a graphical user interface for inputting symbols into the device according to the present invention, representing keys of a keyboard associated with an example of a first subset of symbols of a symbol set;
- Fig. 2: shows the electronic device according Fig. 1, representing keys of a keyboard associated with an example of a further subset of symbols of the symbol set;
- Fig. 3: shows the electronic device according Fig. 1 or Fig. 2, representing keys of a keyboard associated with an example of a further subset of symbols of the symbol set;
- Fig. 4: shows the electronic device according Fig. 1 to Fig. 3, representing keys of a keyboard associated with an example of a further subset of symbols of the symbol set;
- Fig. 5: shows an example for the arrangement of keys of the keyboard associated with the first subset of symbols of the symbol set according Fig. 1;
- Fig. 6: shows an example for the arrangement of keys of the keyboard associated with the further subset of symbols of the symbol set according Fig. 2;
- Fig. 7: shows a principle example for a linguistic database comprising a probability calculation for symbols of the symbol set according Fig. 1 concerning the distribution of the symbols to the keys, referred to the German language;
- Fig. 8: shows a principle example for inputting symbols into an electronic device according Fig.1 to 7 with direction inducing gestics;
- Fig. 9: shows another principle example for inputting symbols into an electronic device according Fig.1 to 7 with direction inducing gestics;
- Fig. 10: shows another principle example for inputting symbols into an electronic device according Fig.1 to 7 with direction inducing gestics;
- Fig. 11: shows another principle example for inputting symbols into an electronic device according Fig.1 to 7 with direction inducing gestics;
- Fig. 12: shows another principle example for inputting symbols into an electronic device according Fig.1 to 7 with direction inducing gestics;
- Fig. 13: shows another principle example for inputting symbols into an electronic device according Fig.1 to 7 with direction inducing gestics;
- Fig. 14: shows another principle example for inputting symbols into an electronic device according Fig.1 to 7 with direction inducing gestics;
- Fig. 15: shows another principle example for inputting symbols into an electronic device according Fig.1 to 7 with direction inducing gestics;
- Fig. 16: shows tables with the results of the respective bigram analysis and also the frequency of occurrence of each single letter "A" to "Z" for a linguistic standard work according the German language; and
- Fig. 17: shows tables for the usage with or as the linguistic database with the results according the bigram analysis of Fig. 16 to determine the letters of the keys according the present invention.

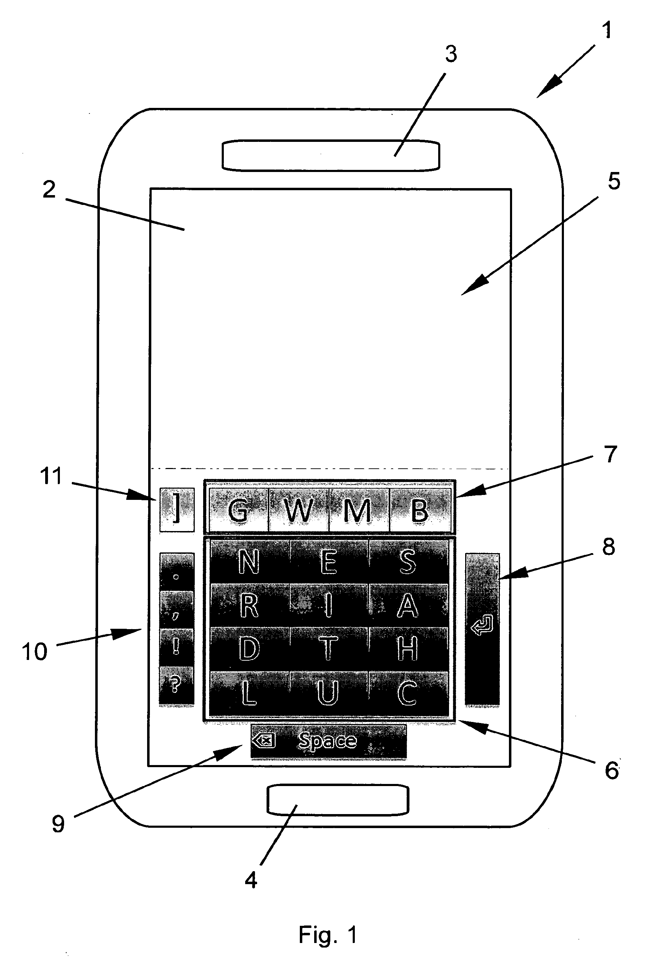

Fig. 1, Fig. 2, Fig. 3 and Fig. 4 show an electronic device 1 having a touch-screen 2 for inputting symbols into the electronic device 1. In the present embodiment the electronic device 1 is a mobile phone for use in a mobile communication network according to GSM, GPRS, UMTS and/or LTE standard. The mobile phone 1 uses the touch-screen 2 for displaying symbols, signs and/or the like and also for inputting symbols into the device. The mobile phone further comprises a loudspeaker 3 for acoustical playback of information and a microphone 4 for acoustical input of information and/or control. For displaying information on the touch-screen 2 and for detecting inputs with the touch-screen 2 the mobile phone 1 comprises a graphical user interface according to the present invention.

The graphical user interface of the mobile phone 1 comprises display means for representing a plurality of selectable keys of a keyboard on the touch-screen 2, which plurality of keys is associated with at least one subset of symbols of a symbol set. Furthermore a graphical user interface of the mobile phone 1 comprises mapping means for selecting a symbol in response to user input using one of said plurality of keys associated with at least one subset of symbols of a symbol set. In the present embodiment the graphical user interface of the mobile phone 1 displays inputted symbols in a portion or area 5 of the touch-screen 2, which is located above a portion or area the selectable keys of a keyboard are displayed in (in Fig. 1 to Fig. 4 these portions or areas are symbolic separated by a dashed line).

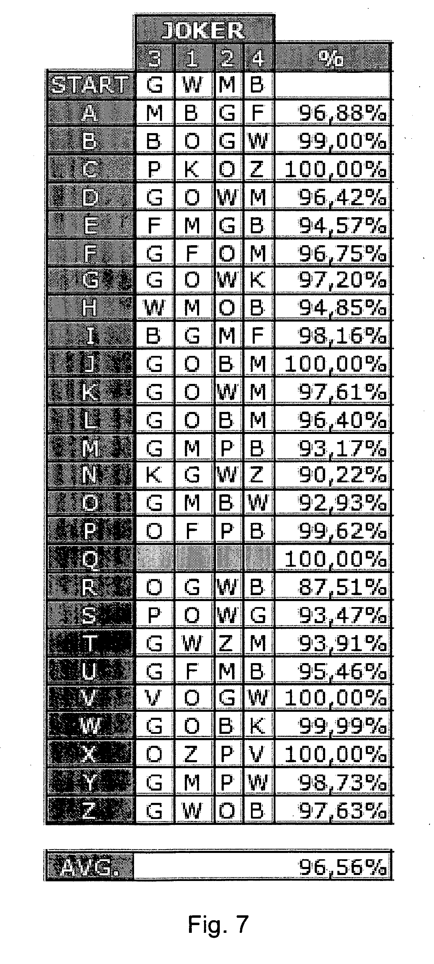

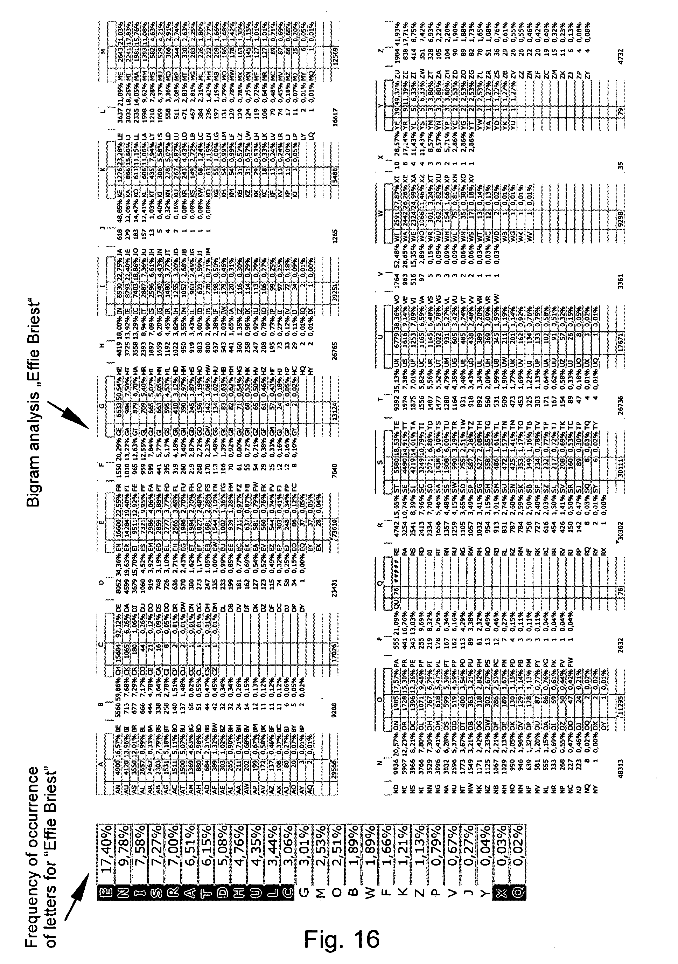

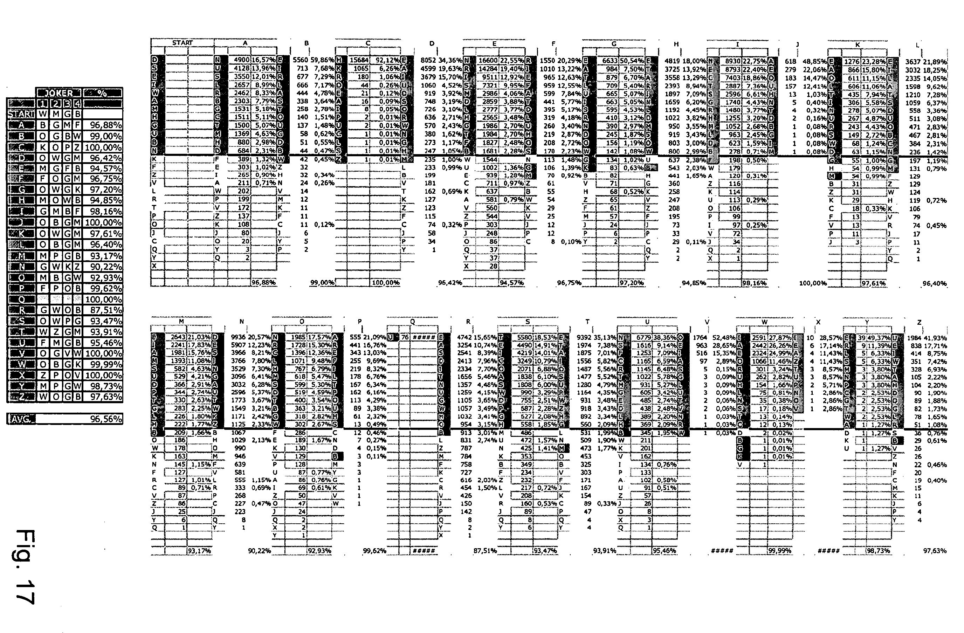

Fig. 1 shows an example of keys of a keyboard associated with a first subset of symbols of a symbol set. Said first subset of symbols of a symbol set gives direct access to twelve letters 6, which are the most commonly used letters of the symbol set according to the respective used language, in the present case the German language, and to four letters 7 which are changed dynamic depending on the last inputted symbol. Presently the keys 7 associated with dynamically changeable letters are located in a portion or area above the keys 6 associated with the twelve commonly used letters. In the present case the dynamically changeable letters of the keys 7 amend the twelve commonly used letters of the keys 6. Thus the example of keys of a keyboard associated with a first subset of symbols of a symbol set shown in Fig. 1 comprise 1 sixteen letters. The dynamic change of the letters of the keys 7 is done automatically by determining the next probably intended letter to be inputted according to a linguistic database of the respective used language. Fig. 7 shows an example of such linguistic database according to the German language. The linguistic database is preferably determined with a so called bigram analysis according to the respective used language. Thereby a text, which is concerning the use of characters representative for the language, is analyzed with respect to a sequence of two consecutive characters, whereby for each pair of letters the frequency of occurrence is determined. In the present case such a linguistic database according to the German language is created by analyzing a standard work, presently "Effie Briest", a novel by Theodor Fontane, with respect to a sequence of two consecutive characters for each letter "A" to "Z". Thus for each letter "A" to "Z" the frequency of occurrence of each combination with another letter "A" to "Z" is determined. Based on the frequency of occurrence of each combination of two letters the the dynamically changeable letters of the keys 7 are determined automatically from the linguistic database. The tables in Fig. 16 show the results of the respective bigram analysis and also the frequency of occurrence of each single letter "A" to "Z" for "Effie Briest". The Tables in Fig. 17 show the usage of the linguistic database with the results according the bigram analysis of Fig. 16.

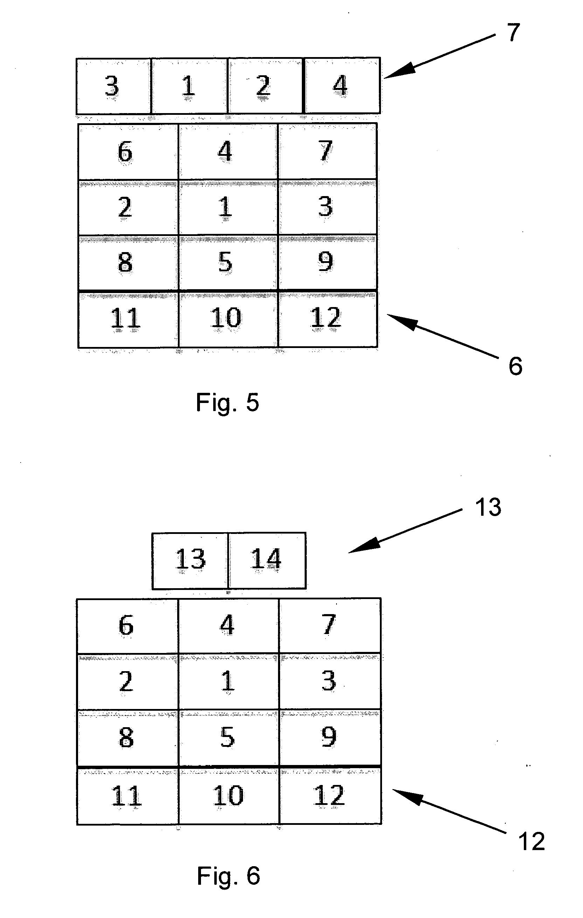

Fig. 5 shows an example for the arrangement of the keys 6 and an example for the arrangement of the keys 7 according to a probability calculation for the respective letters. Numbers shown in Fig. 5 represent the probability, whereby raising numbers advantageously represent a descending probability.

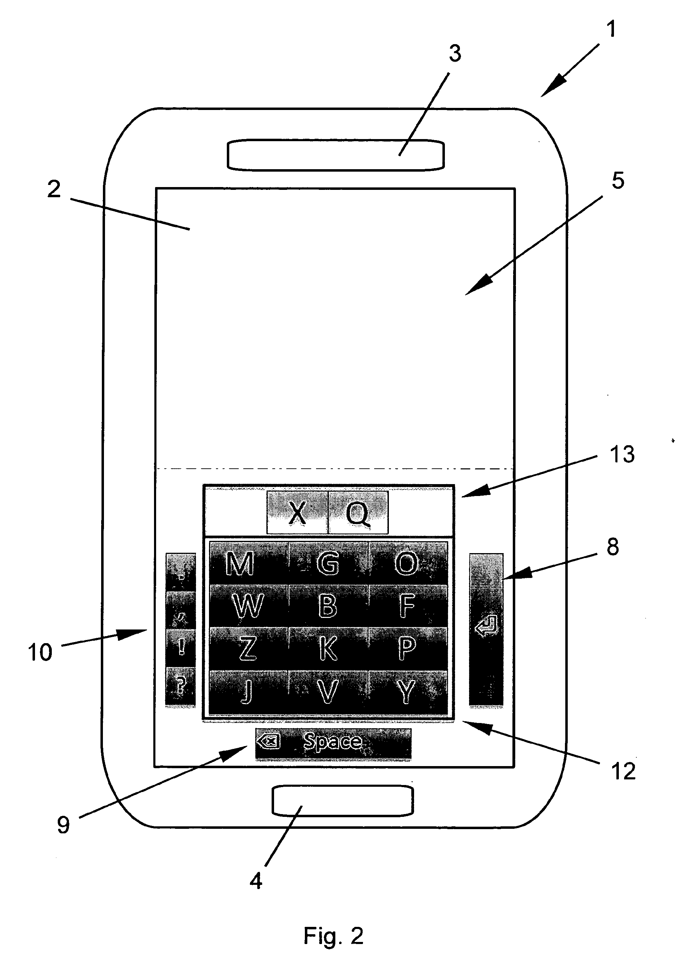

In the present case said first subset furthermore comprises keys 8, 9 and 10, which are associated with overall commonly usable symbols, in the present case for a wordwrap 8, a blank or space character 9 and for punctuation marks 10. These overall commonly usable symbols of a symbol set 8, 9 and 10 are in the present case also part of further subsets of symbols of a symbol set, as shown in Fig. 2, Fig. 3 and Fig. 4. Presently the keys 8, 9, 10 associated with an overall commonly usable symbol of a symbol set are arranged in form of a "U" around the keys 6.

The keys of a keyboard associated with a first subset of symbols of a symbol set according Fig. 1 in addition comprise a key 11, which is associated with a dynamically changeable special character of a symbol set. The key 11 is thereby arranged above the keys 10 next to the keys 7.

Fig. 2 shows an example of keys of a keyboard associated with a further subset of symbols of a symbol set. Said further subset of symbols of a symbol set gives direct access to fourteen letters 12, which are the residual letters compared with the twelve most commonly used letters of the keys 6 of the first subset, and to two letters 13 which preferably are changed dynamic depending on the last inputted symbol. Presently the keys 13 associated with preferably dynamically changeable letters are located in a portion or area above the keys 12 associated with the fourteen residual letters. The dynamic change of the letters of the keys 13 is done automatically by determining the next probably intended letter to be inputted according to a linguistic database of the respective used language. Fig. 6 shows an example for the arrangement of the keys 12 and 13 of the further subset of symbols of a symbol set according to a probability calculation for the respective letters. Numbers shown in Fig. 6 represent the probability, whereby raising numbers advantageously represent a descending probability.

In another embodiment of the present invention, the keys 13 of the further subset of symbols of a symbol set according Fig. 2 are not changed dynamically. Thus the keys 12 and 13 of the further subset of symbols of a symbol set according Fig. 2 comprise the fourteen residual letters related to the twelve most commonly used letters of the keys 6 of the first subset according Fig. 1.

In the present case said further subset furthermore comprises keys 8, 9 and 10, which are associated with overall commonly usable symbols, in the present case for a word-wrap 8, a blank or space character 9 and for punctuation marks 10. These overall commonly usable symbols of a symbol set 8, 9 and 10 are in the present case also part of further subsets of symbols of a symbol set, as shown in Fig. 1, Fig. 3 and Fig. 4. Presently the keys 8, 9, 10 associated with an overall commonly usable symbol of a symbol set are arranged in form of a "U" around the keys 6.

In the present case the dynamically changeable letters of the keys 7 amending the twelve commonly used letters of the keys 6 comprise the letters of the further subset of symbols of a symbol set according Fig. 2, which are in combination with the letters 6 of the first subset are the next probably intended or most verisimilar letter to be inputted according to the respective used language.

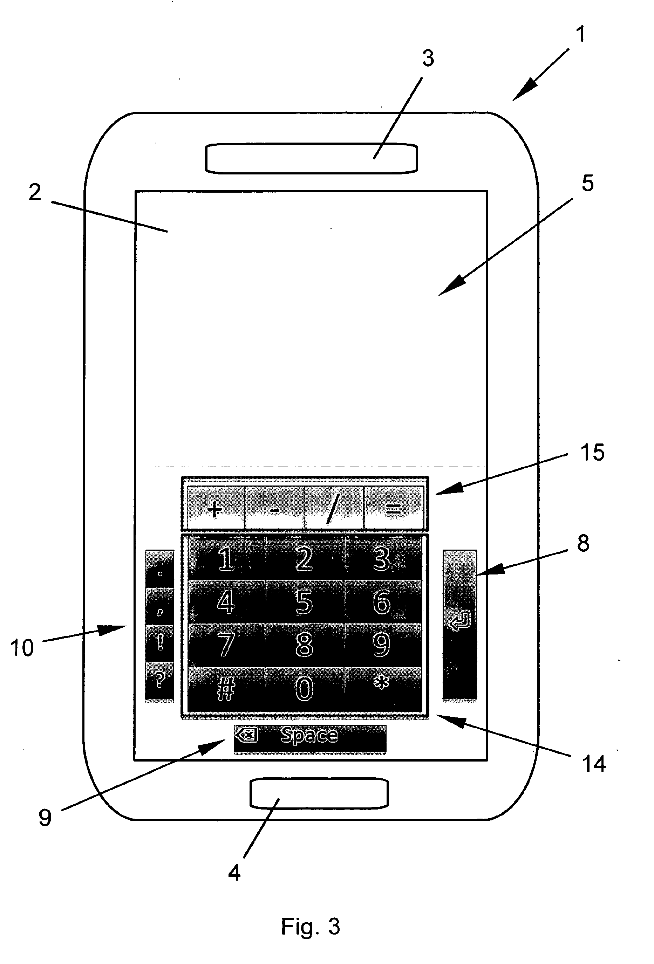

Fig. 3 shows an example of keys of a keyboard associated with a further subset of symbols of a symbol set. Said further subset of symbols of a symbol set gives direct access to keys 14 of a keyboard associated with a subset of numbers and special characters of a symbol set, and to four keys 15 of a keyboard associated with dynamically changeable arithmetic operators of a symbol set. Presently the keys 15 associated with dynamically changeable arithmetic operators are located in a portion or area above the keys 14 associated with a subset of numbers and special characters of a symbol set. The dynamic change of the arithmetic operators of the keys 15 is done automatically by determining the next probably intended arithmetic operators to be inputted.

In the present case said further subset furthermore comprises keys 8, 9 and 10, which are associated with overall commonly usable symbols, in the present case for a word-wrap 8, a blank or space character 9 and for punctuation marks 10. These overall commonly usable symbols of a symbol set 8, 9 and 10 are in the present case also part of further subsets of symbols of a symbol set, as shown in Fig. 1, Fig. 2 and Fig. 4. Presently the keys 8, 9, 10 associated with an overall commonly usable symbol of a symbol set are arranged in form of a "U" around the keys 6.

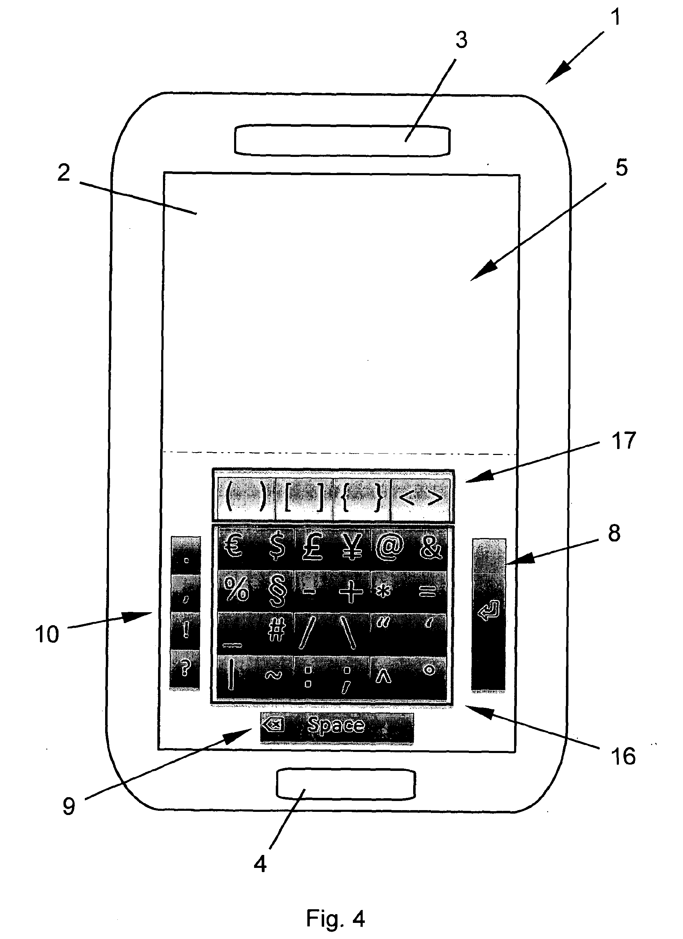

Fig. 4 shows an example of keys of a keyboard associated with a further subset of symbols of a symbol set. Said further subset of symbols of a symbol set gives direct access to keys 16 of a keyboard associated with a subset of pairs of special characters of a symbol set, in the present case especially comprising currency symbols, and to four keys 17 of a keyboard associated with dynamically changeable pairs of special characters of a symbol set, in the present case comprising a pair of parenthesis "(" and ")", a pair of brackets "[" and "]", a pair of braces "{" and "}". Presently the keys 17 are located in a portion or area above the keys 16. The dynamic change of the arithmetic operators of the keys 17 is done automatically by determining the next probably intended or necessary special character of a pair of such special characters to be inputted.

In the present case said further subset furthermore comprises keys 8, 9 and 10, which are associated with overall commonly usable symbols, in the present case for a word-wrap 8, a blank or space character 9 and for punctuation marks 10. These overall commonly usable symbols of a symbol set 8, 9 and 10 are in the present case also part of further subsets of symbols of a symbol set, as shown in Fig. 1, Fig. 2 and Fig. 3. Presently the keys 8, 9, 10 associated with an overall commonly usable symbol of a symbol set are arranged in form of a "U" around the keys 6.

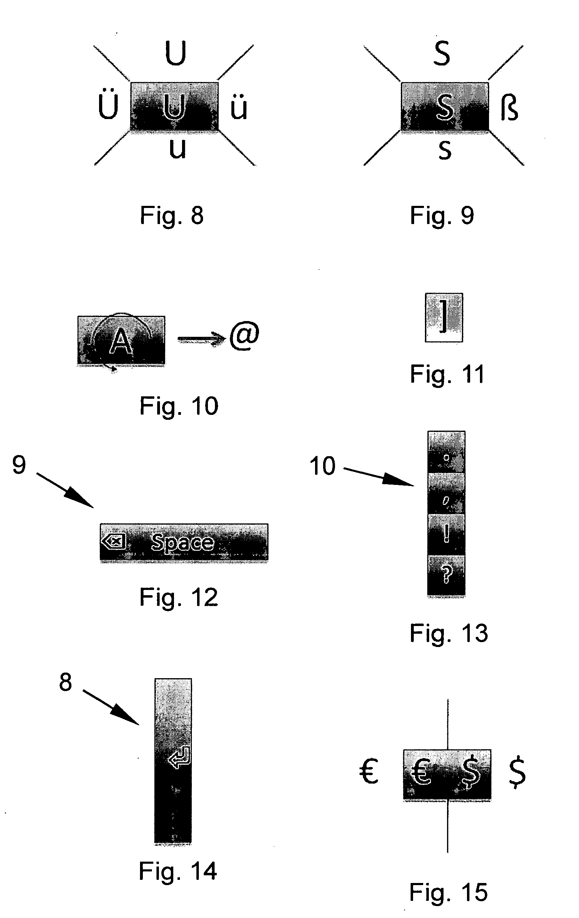

The graphical user interface of the mobile phone 1 advantageously allows an input of symbols into the mobile phone 1 with kinemimic gestics, presently direction inducing gestics. The function of such direction inducing gestics are explained in the following on the exemplary embodiments shown in Fig. 8, Fig. 9, Fig. 10, Fig. 11, Fig. 12, Fig. 13, Fig. 14 and Fig. 15.

Fig. 8 shows a selectable key of a keyboard which is associated with the letter "U" of a subset of symbols of a symbol set. Selecting the key "U" by pressing the key presently realises a lower case input, thus the lower case letter "u". An upward movement or shifting of the key "U" realised an input of an upper case letter, thus "U". A down word movement or shifting of the key "U" realises an input of a lower case letter, thus "u". A movement or shifting of the key "U" to the left realises presently the input of a related umlaut as capital letter, thus "ü", if existent for the letter of the respective key. A movement or shifting to the right of the key realises an input of the related small capital letter, thus "ü", if existent for the respective letter of the key.

Fig. 9 shows a selectable key of a keyboard which is associated with the letter "S" of a subset of symbols of a symbol set. Selecting the key "S" by pressing the key presently realises a lower case input, thus the lower case letter "s". An upward movement or shifting of the key "S" realised an input of an upper case letter, thus "S". A down word movement or shifting of the key "S" realises an input of a lower case letter, thus "s". A movement or shifting of the key "S" to the right realises presently the input of a related special letter, thus "ß" according the German language, if existent for the letter of the respective key.

A movement or shifting of a key describing kind of circle realises an input of an additional option. Fig. 10 shows this for the letter "A". Describing a circle by pressing the key "A" realises presently an input of the special character "@".

Referring to the key 11 associated with a dynamically changeable special character of a symbol set (compare Fig. 1) an input with a direction inducing gestic realises the following inputs. Pressing of the key realises an input of the represented special character, in the present case "]". The allocation or assignment of the key is created dynamically and displays the respectively closing sign, in this case the right parenthesis "]". If for example a user opens a bracket "[" by using the keyboard layout according to Fig. 4, the keyboard layout automatically switches presently back to the keyboard layout according to Fig. 1 and the key 11 with a dynamically changeable special character displays the respective special character of the pair of special characters according to Fig. 4. This function is presently supported for the special character pairs "()", "[]", "{}", "<>" and " _{"} " ".

Fig. 12 shows the key 9, associated with the blank or space character. Pressing of the key 9 realises input of the blank or space character. Movement or shifting of the key 9 to the left realises a delete of the last inputted symbol. A hold of the left portion of the key 9 deletes the respectively last inputted symbol until the key 9 is let loose. If the keyboard layout according to Fig. 1 is presently activated a movement or shifting of the key 9 from the bottom the touch-screen to the middle of the touch-screen realises an automatically switching to the keyboard layout according to Fig. 2. In all the other keyboard layouts according to Fig. 2, Fig. 3 and Fig. 4 a movement or shifting of the key 9 from the bottom of the touch-screen 2 to the middle of the touch-screen 2 realises an automatically switching to the keyboard layout according to Fig. 1.

Fig. 13 shows the keys 10, associated with overall commonly usable punctuation marks of a symbol set. Pressing one of the keys 10 realises input of the respective punctuation mark. Movement or shifting of the keys 10 to the right realises a displaying of the special character subset according to Fig. 4. If the keyboard layout according to Fig. 4 is presently activated a movement or shifting of the keys 10 to the right realises an automatically switching to the keyboard layout according to Fig. 1.

Fig. 14 shows the key 8, associated with the overall commonly usable word-wrap. Pressing of the key 8 realises input of a word-wrap. Movement or shifting of the key 8 to the left realises an automatically switching to the keyboard layout according to Fig. 3. If the keyboard layout according to Fig. 3 is presently activated a movement or shifting of the key 8 to the left realises an automatically switching to the keyboard layout according to Fig. 1.

Fig. 15 shows a selectable key of a keyboard which is associated with a subset of pairs of special characters of a symbol set, in the present case especially comprising currency symbols "€ $". Presently selecting the key "€ $" by pressing the key presently realises no input. A movement or shifting of the key "€ $" to the left realises presently the input of the left currency symbol, thus "€". A movement or shifting to the right of the key realises an input of the right currency symbol, thus "$".

The exemplary embodiments of the invention shown in the figures of the drawing and explained in connection with the description merely serve to explain the invention and are in no way restrictive.

### List of reference numerals:

- 1: electronic device/mobile phone
- 2: touch-screen (electronic device/mobile phone (1))
- 3: loudspeaker (electronic device/mobile phone (1))
- 4: microphone (electronic device/mobile phone (1))
- 5: portion/area for displaying inputted symbols (touch-screen (2))
- 6: keys of a keyboard associated with a first subset of letters of a symbol set
- 7: keys of a keyboard associated with dynamically changeable letters of the first subset of letters of a symbol set
- 8: key of a keyboard associated with an overall commonly usable symbol of a symbol set (wordwrap)
- 9: key of a keyboard associated with an overall commonly usable symbol of a symbol set (blank/space character)
- 10: keys of a keyboard associated with overall commonly usable punctuation marks of a symbol set
- 11: key of a keyboard associated with a dynamically changeable special character of a symbol set
- 12: keys of a keyboard associated with a second subset of letters of a symbol set
- 13: keys of a keyboard associated with dynamically changeable letters of the second subset of letters of a symbol set
- 14: keys of a keyboard associated with a subset of numbers and special characters of a symbol set
- 15: keys of a keyboard associated with dynamically changeable arithmetic operators of a symbol set
- 16: keys of a keyboard associated with a subset of pairs of special characters of a symbol set
- 17: keys of a keyboard associated with dynamically changeable pairs of special characters of a symbol set

## Claims

1. A graphical user interface for inputting symbols into an electronic device having a touch-screen,
especially a portable consumer device like a terminal for use in a mobile communication network according to GSM, GPRS, UMTS and/or LTE standard,
comprising
display means for representing a plurality of selectable keys of a keyboard on the touch-screen, said plurality of keys associated with symbols of a symbol set,
and
mapping means for selecting a symbol in response to a user input using a one of said plurality of keys associated with symbols of a symbol set, **characterized by**
means for inputting symbols into said electronic device with kinemimic gestics, realising an input of symbols with direction inducing gestics.

2. A graphical user interface according to claim 1, **characterized in that** an input with kinemimic gestics comprise an input of different symbols with a one of said plurality of keys by pressing said key, by moving or shifting said key upwards, by moving or shifting said key downwards, by moving or shifting said key to the left, by moving or shifting said key to the right, or by movement or shifting said key describing a kind of circle.

3. A graphical user interface according to claim 1 or claim 2, **characterized in that** said means for inputting symbols into said electronic device with kinemimic gestics realise upper and/or lower case input and/or special character input.

4. A graphical user interface according to claim 2 or claim 3, **characterized in that** a moving or shifting said key upwards realises an upper case input.

5. A graphical user interface according to one or more of the claims 2 to 4, **characterized in that** a pressing said key or a moving or shifting said key downwards realises a lower case input.

6. A graphical user interface according to one or more of the claims 1 to 5, **characterized in that** said upper and/or lower case input and/or special character input takes place according the respective used language.

7. A graphical user interface according to one or more of the claims 1 to 6, **characterized by** display means for displaying inputted symbols on the touch-screen, preferable in a portion of the touch-screen which is disposed at a distance of the keys displayed on the touch-screen, especially preferable in a portion of the touch-screen which is located above the portion, the keys are displayed in.

8. A method for inputting symbols into an electronic device having a touch-screen,
especially a portable consumer device like a terminal for use in a mobile communication network according to GSM, GPRS, UMTS and/or LTE standard,
comprising:
representing a plurality of selectable keys of a keyboard on the touch-screen, said plurality of keys associated with symbols of a symbol set, and
mapping for selecting a symbol in response to a user input using a one of said plurality of keys associated with symbols of a symbol set,
**characterized by**
inputting symbols into said electronic device with kinemimic gestics, realising an input of symbols with direction inducing gestics.

9. A method according to claim 8, **characterized by** inputting different symbols with a one of said plurality of keys by pressing said key, by moving or shifting said key upwards, by moving or shifting said key downwards, by moving or shifting said key to the left, by moving or shifting said key to the right, or by movement or shifting said key describing a kind of circle.

10. A method according to claim 8 or claim 9, **characterized by** inputting symbols into said electronic device with kinemimic gestics realising upper and/or lower case input and/or special character input.

11. A method according to claim 9 or 10, **characterized in that** a moving or shifting said key upwards realises an upper case input.

12. A method according to one or more of the claims 9 to 11, **characterized in that** a pressing said key or a moving or shifting said key downwards realises a lower case input.

13. A method according to one or more of the claims 8 to 12, **characterized in that** said upper and/or lower case input and/or special character input takes place according the respective used language.

14. A method according to one or more of the claims 8 to 13, **characterized by** displaying inputted symbols on the touch-screen, preferable in a portion of the touch-screen which is disposed at a distance of the keys displayed on the touch-screen, especially preferable in a portion of the touch-screen which is located above the portion, the keys are displayed in.

15. An electronic device, especially a portable consumer device like a terminal for use in a mobile communication network according to GSM, GPRS, UMTS , and/or LTE standard, comprising a graphical user interface for inputting symbols into said electronic device according to one or more of the claims 1 to 7 with a method according to one or more of the claims 8 to 14.
